# EUROPEAN PATENT SPECIFICATION

(11) **EP 3 422 487 B1**
(45) Date of publication and mention of the grant of the patent: **09.06.2021**
(21) Application number: 18178605.4
(22) Date of filing: 19.06.2018
(51) Int. Cl.: H01R 13/60

(54) **WIRING-HARNESS WITH CONNECTOR STAGING DEVICE**
KABELBAUM MIT VERBINDER-STAGING-VORRICHTUNG
FAISCEAU DE CÂBLAGE COMPORTANT UN DISPOSITIF D'ENTREPOSAGE DE CONNECTEUR

(30) Priority: 27.06.2017 US 201715634268
(43) Date of publication of application: 02.01.2019
(73) Proprietor: Aptiv Technologies Limited, St. Michael (BB)
(72) Inventor: PETERSON, David, R, AURORA, OHIO 44202 (US); SUDIK, JR, Joseph, Niles, OHIO 44446 (US); SZUBA, JR, Frank W, El Paso, Texas 79912 (US); INTIHAR, Mark, San Jose, California 95126 (US); DECKER, Benjamin, San Jose, California 95126 (US); KNEPPERS, Andrew, San Jose, California 95126 (US)
(74) Representative: Westphal, Mussgnug Patentanwälte & Partner mbB

(56) References cited:
- AU-A- 8 399 175
- JP-A- H07 130 449
- JP-A- H08 298 024
- US-A- 5 964 617

## Description

### TECHNICAL FIELD OF INVENTION

This disclosure generally relates a system comprising a wiring-harness having an electrical-connector staging-device.

### BACKGROUND OF INVENTION

The typical vehicle wiring-harness may be several meters in length and may contain multiple branches that interconnect electrical components to electrical power and/or computer controllers. The multiple wiring-harness branches typically terminate with electrical-connectors that may be temporarily attached to the wiring-harness with adhesive tape, or other temporary attachment methods, to protect the electrical-connectors during unpacking and handling. Removal of the adhesive tape in a vehicle assembly plant is required before the wiring-harness is installed into the vehicle, and may typically be performed by a human during the installation process.

Publication JP H07 130449 A discloses a wire harness comprising a connector and a connector receiving member, wherein the connector receiving member comprises two lateral locking members mounted on springs. When the connector is inserted into the connector receiving member, the locking members are slightly turned inward, holding the connector and inhibiting the movement in the drawing direction. Further wire harnesses are known from publications JP H08 298024 A and US 5 964 617 A.

As assembly vehicle processes are increasingly automated, there may be a desire to use a robotic installer for installing a wire harness within the vehicle. However, in order to do this, a robotic assembler must be able to consistently locate the multiple connectors on the harness and remove the adhesive tape. These are both fairly complex operations for a robot.

Therefore, a system comprising a vehicle wiring-harness that is configured to be more easily handled by a robotic installer remains desired.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also be inventions.

### SUMMARY OF THE INVENTION

In accordance with one embodiment, a system comprising a wiring-harness is provided. The system comprises a wire-harness with a wire-cable and an electrical-connector and a staging-device. The staging-device has a cavity defining a flexible-member in compressive contact with the electrical-connector. The flexible-member is configured to removably retain the electrical-connector within the cavity. The cavity locates the electrical-connector in a predetermined-position within the staging-device, such that the electrical-connector is presented to an assembler, e.g. a robot, in the predetermined-position.

The flexible-member is a quarter-round ribbed-spacer having a plurality of quarter-round ribs perpendicularly or angularly extending from a central shank. The flexible member may be formed of a compliant material different from a material forming the staging-device, and may be disposed within a comer of the cavity. The flexible-member may be secured to the staging-device by a T-shaped rail defined by the flexible-member that is disposed within a corresponding T-shaped-cavity defined by the staging-device.

At least thirty percent of a surface-area of the electrical-connector may be disposed within the cavity.

The electrical-connector may be located with a true-position of less than 2.0 millimeters relative to the predetermined-position, and preferably with the true-position of less than 0.5 millimeter relative to the predetermined-position.

The flexible-member may apply a retention-force to the electrical-connector within the cavity in a range from about 40 Newtons to about 60 Newtons.

In another embodiment, a staging-device configured to retain an electrical-connector of a wiring harness is provided. The staging-device includes a staging-device-body and a flexible-member. The staging-device-body defines a cavity. The flexible-member is configured to be in compressive contact with the electrical-connector when inserted within the cavity. The flexible-member is configured to removably retain the electrical-connector within the cavity. The cavity locates the electrical-connector in a predetermined-position within the staging-device such that the electrical-connector is presented to an assembler in the predetermined-position.

In another example which is not part of the invention, the flexible-member may be a arcuate flexible-beam that is integrally formed with the staging-device.

The flexible-member is a quarter-round ribbed-spacer.

At least thirty percent of a surface-area of the electrical-connector may be disposed within the cavity.

The electrical-connector may be located with a true-position of less than 2.0 millimeters relative to the predetermined-position.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is an illustration of a wiring-harness with a staging-device in accordance with an embodiment of the invention;
Fig. 2A is an illustration of a top-view of the staging-device of Fig. 1 showing an example which does not form part of the invention;
Fig. 2B is an illustration of a front-view of the staging-device of Fig. 1 showing an example which does not form part of the invention;
Fig. 3A is an illustration of an exploded-view of a cavity, a flexible-member, and an electrical-connector in accordance with an embodiment of the invention;
Fig. 3B is an illustration of a perspective-view of the cavity, the flexible-member, and the electrical-connector of Fig. 3A in accordance with an embodiment of the invention;
Fig. 4A is an illustration of the cavity of Fig. 3A in accordance with an embodiment of the invention; and
Fig. 4B is an illustration of the flexible-member of Figs. 3A-3B in accordance with an embodiment of the invention.

The reference numbers of similar elements in the various embodiments shown in the figures share the last two digits.

### DETAILED DESCRIPTION

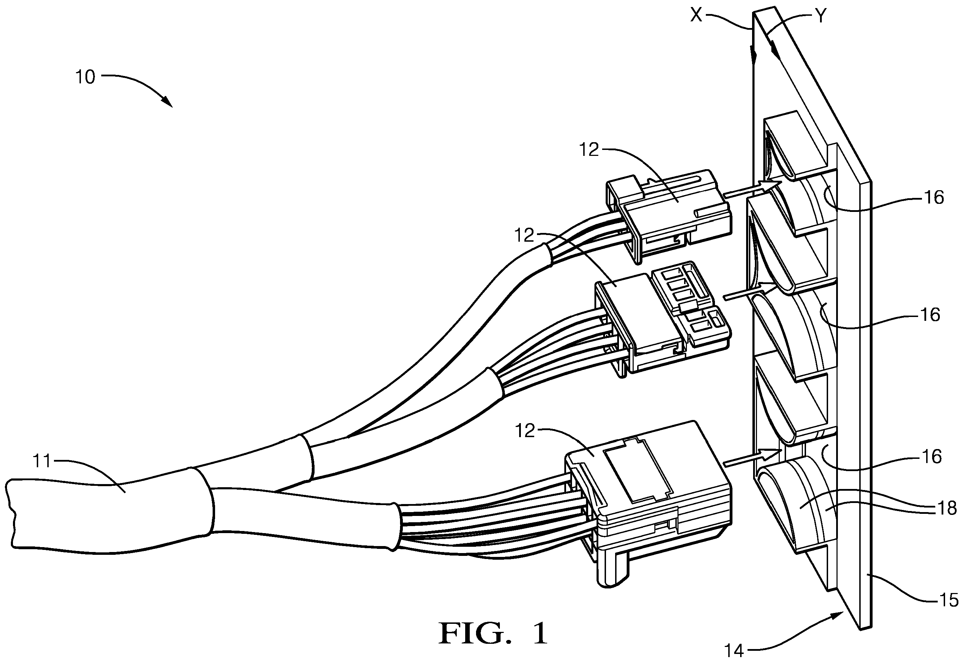

Fig. 1 illustrates a non-limiting example of a wiring-harness 10, suitable for use in a vehicle (not shown). As will be described in more detail below, the wiring-harness 10 is an improvement over prior wiring harnesses because the wiring-harness 10 is configured to present the wiring-harness 10 to an assembler (e.g. a robot or other automated assembly process) in a repeatable and reproducible manner. The wiring-harness 10 includes a wire-cable 11 having an electrical-connector 12 configured to mate with a corresponding electrical-connector (not shown) that may be attached to an electrical-component on the vehicle. The wiring-harness 10 may have a plurality of wire-cables 11 containing a plurality of electrical-connectors 12, as will be evident to those skilled in the art. The plurality of electrical-connectors 12 may be of a same design, or may be of a differing designs with different dimensions.

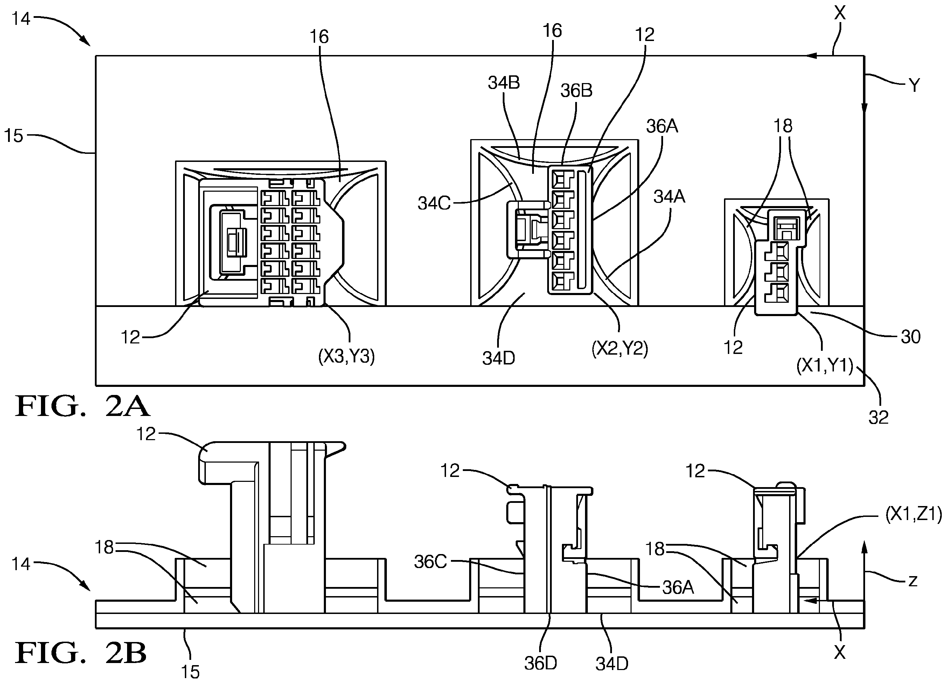

The system includes a staging-device 14 having a staging-device-body 15 that defines a cavity 16. The cavity 16 defines a flexible-member 18 in compressive contact with the electrical-connector 12 (see Figs. 2A-2B). The staging-device 14 may include a single cavity 16, or may include a plurality of cavities 16 to retain the plurality of electrical-connectors 12, as illustrated in Fig 1. The staging-device 14 may be attached to the wiring-harness 10, or may be attached to a wiring-conduit (not shown) in which the wiring-harness 10 may be disposed, or may be a stand-alone device. The flexible-member 18 is configured to removably retain the electrical-connector 12 within the cavity 16 while the wiring-harness 10 is removed from a shipping container and staged for installation onto the vehicle.

Figs 2A-2B illustrate a top-view and a front-view, respectively, of the staging-device 14. The wiring-harness 10 is removed from Figs. 2A-2B for purposes of clarity. The flexible-member 18 may be a arcuate flexible-beam 20 that is integrally formed with the staging-device 14. The arcuate flexible-beam 20 may have an upper-portion and a lower-portion that may be separated by a gap. The arcuate flexible-beam 20 may be integrally formed with the staging-device 14, or may be removable and replaceable.

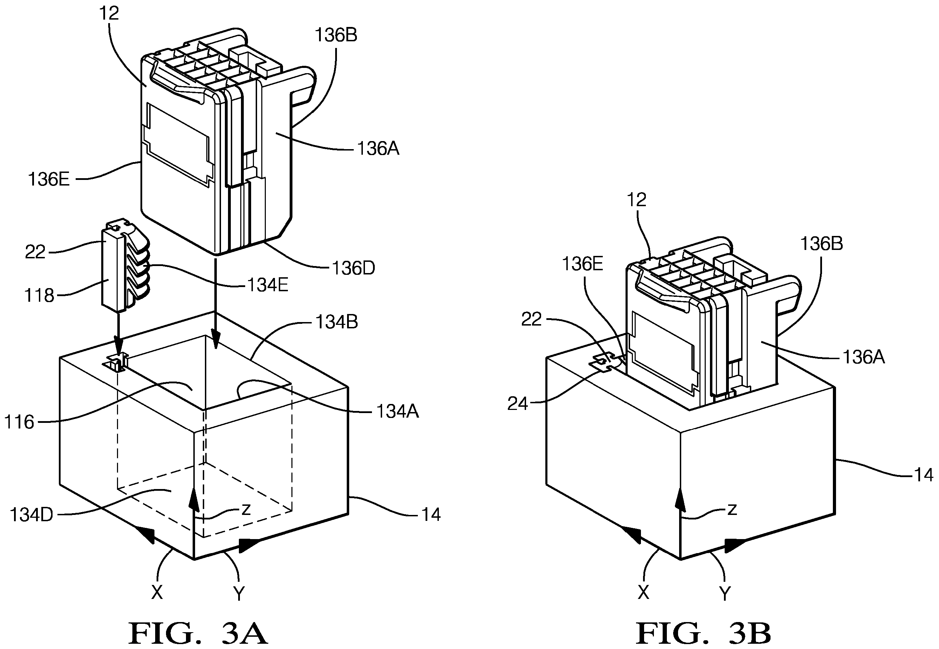

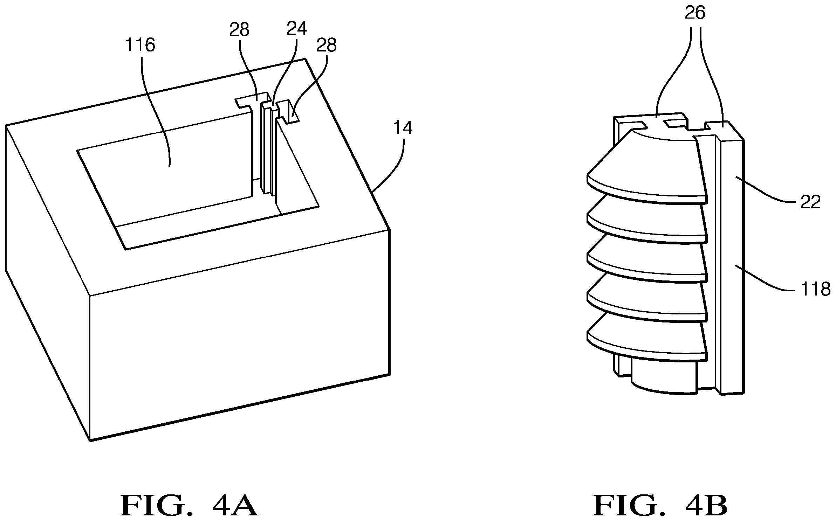

Figs. 3A-3B illustrate another embodiment of a cavity 116 and a flexible-member 118 that is a quarter-round ribbed-spacer 22. A "ribbed-spacer" is commonly referred to as a "fir-tree", "pine-tree", and/or a "Christmas-tree" type of fastener, all of which may be included as the flexible-member 118. The individual ribs of the quarter-round ribbed-spacer 22 may be perpendicular to the shank or may be angled to the shank to provide an insertion lead-in for the electrical-connector 12. The flexible-member 118 (i.e. the quarter-round ribbed-spacer 22) may be formed of a compliant material different from a material forming the staging-device 14. The quarter-round ribbed-spacer 22 may be disposed within a corner 24 of the cavity 116. The quarter-round ribbed-spacer 22 may be secured to the staging-device 14 by a T-shaped rail 26, defined by the flexible-member 118, that is disposed within a corresponding T-shaped-cavity 28 defined by the staging-device 14, as illustrated in Figs. 4A-4B. A radius of the flexible-member 118 may be varied to accommodate the electrical-connectors 12 with various dimensions without changing a dimension of the cavity 116. While the flexible-member 118 illustrated in Figs. 3A-4B is described as having a "quarter-round" shape, other shapes are envisioned, but not shown, that may accommodate a contour of the electrical-connector 12. This feature is beneficial because the cavity 116 may be of a standard dimension, whereas the flexible-member 118 may be fabricated to differing shapes and dimensions to retain electrical-connectors 12 of varying dimensions.

Returning now to Figs. 2A-2B, the cavity 16 locates 30 the electrical-connector 12 in a predetermined-position 32 within the staging-device 14, such that the electrical-connector 12 is presented to the assembler in the predetermined-position 32. The location 30 of the electrical-connector 12, relative to an X-axis, a Y-axis, and a Z-axis of the staging-device 14 may be presented to the assembler in advance of the assembly process (i.e. downloaded into a computer memory - not shown), or may be encoded on the staging-device 14 in the form of a radiofrequency transmitter, or a bar code or other indicia (not shown) to be read by a vision system (not shown) included in the assembler.

Preferably, at least thirty percent (30%) of a surface-area of the electrical-connector 12 is disposed within the cavity 16 to maintain an alignment of the electrical-connector 12. The electrical-connector 12 is preferably located 30 with a true-position of less than 2.0 millimeters (2.0 mm) relative to the predetermined-position 32, and more preferably located 30 with the true-position of less than 0.5 mm. As used herein, the true-position is an allowable tolerance window surrounding the predetermined-position 32 in which the location 30 of the electrical-connector 12 may exist.

Each cavity 16 of the staging-device 14 may include at least four datum-surfaces 34, illustrated in Figs. 2A-2B as datum-surfaces 34A-34D, that are configured to contact the electrical-connector 12 disposed within the cavity 16 on at least four corresponding datum-points 36, illustrated in Figs. 2A-2B as corresponding datum-points 36A-36D. The four corresponding datum-points 36 on the electrical-connector 12 include a first-side 36A, a second-side 36B adjacent to the first-side 36A, a third-side 36C opposite the first-side 36A, and a mating-side 36D or terminal-end of the electrical-connector 12 that lies in a plane perpendicular to the Z-axis of the staging-device 14. One skilled in the art of will recognize that the corresponding datum-points 36 may contact the datum-surfaces 34 anywhere on the datum-surface 34, and may vary due to part-to-part dimensional variation. In other words, the exact point of contact between the corresponding datum-point 36 and the datum-surface 34 may vary.

For the specific example of the cavity 116 with the quarter-round ribbed-spacer 22 illustrated in Figs. 3A-3B, the cavity 116 also includes at least four datum-surfaces 134, illustrated as datum-surfaces 134A-134B and 134D-134E, and at least four corresponding datum-points 136 on the electrical-connector 12 illustrated as datum-points 136A-136B and 136D-136E. The at least four corresponding datum-points 136 include a first-side 136A, a second-side 136B adjacent to the first-side 136A, a mating-side 136D or terminal-end that lies in a plane perpendicular the Z-axis of the staging-device 14, and an edge 136E opposite an intersection of the first-side 136A with the second-side 136B.

Returning again to Figs. 2A-2B, the flexible-member 18 applies a retention-force (not shown) to the electrical-connector 12 within the cavity 16 in a range from about 40 Newtons (40 N) to about 60 N. This retention-force is sufficient to retain the electrical-connector 12 within the cavity 16 during shipping and handling and ensures the electrical-connector 12 is located 30 at the predetermined-position 32 until the assembler removes the electrical-connector 12 from the staging-device 14.

The examples presented herein are directed to electrical-cables. However, other embodiments of the staging-device 14 may be envisioned that are adapted for use with optical-cables or hybrid-cables including both electrical and optical-cables. Yet other embodiments of the staging-device 14, may be envisioned that are configured for installing pneumatic or hydraulic lines.

Accordingly, a wiring-harness 10 and a staging-device 14 for the system is provided. The system is beneficial because it is configured to present the electrical-connector 12 to the assembler (e.g. a robot or other automated assembly process) in the predetermined-position 32, which reduces an installation time required to install the wiring-harness 10 onto the vehicle and allowing easier automation of the installation process since removal of adhesive tape is no longer required to secure the connectors.

While this invention has been described in terms of the preferred embodiments thereof, it is not intended to be so limited, but rather only to the extent set forth in the claims that follow. Moreover, the use of the terms first, second, upper, lower, etc. does not denote any order of importance, location, or orientation, but rather the terms first, second, etc. are used to distinguish one element from another. Furthermore, the use of the terms a, an, etc. do not denote a limitation of quantity, but rather denote the presence of at least one of the referenced items.

## Claims

1. A system comprising:
wiring harness (10) having a wire cable (11) and an electrical connector (12); and
a staging device (14) having a cavity (16) defining a flexible member (18) in compressive contact with the electrical connector (12), said flexible member (18) configured to removably retain the electrical connector (12) within the cavity (16), wherein the cavity (16) locates the electrical connector (12) in a predetermined position (32) within the staging device (14), such that the electrical connector (12) is presented to an assembler in the predetermined position (32), **characterized in that** the flexible member (18) is a quarter round ribbed spacer (22) having a plurality of quarter-round ribs perpendicularly or angularly extending from a central shank.

2. The system in accordance with claim 1, wherein the flexible member (18) is formed of a compliant material different from a material forming the staging device (14).

3. The system in accordance with any preceding claim, wherein the flexible member (18) is disposed within a comer (24) of the cavity (16).

4. The system in accordance with any preceding claim, wherein the flexible member (18) is secured to the staging device (14) by a t-shaped rail (26) defined by the flexible member (18) that is disposed within a corresponding t-shaped cavity (28) defined by the staging device (14).

5. The system in accordance with any preceding claim, wherein at least thirty percent of a surface area of the electrical connector (12) is disposed within the cavity (16).

6. The system in accordance with any preceding claim, wherein the electrical connector (12) is located with a true position of less than 2.0 millimeters relative to the predetermined position (32).

7. The system in accordance with any preceding claim, wherein the electrical connector (12) is located with the true position of less than 0.5 millimeter relative to the predetermined position (32).

8. The system in accordance with any preceding claim, wherein each cavity (16) includes at least four datum surfaces (34), said four datum surfaces (34) configured to contact the electrical connector (12) disposed within the cavity (16) on at least four corresponding datum points (36).

9. The system in accordance with any preceding claim, wherein the flexible member (18) applies a retention force to the electrical connector (12) within the cavity (16) in a range from about 40 newtons to about 60 newtons.

## Patentansprüche

1. Ein System, welches umfasst:
einen Kabelbaum (10), der ein Drahtkabel (11) und einen elektrischen Steckverbinder (12) umfasst; und
eine Sammelvorrichtung (14), welche einen Hohlraum (16) aufweist, der ein in Druckkontakt mit dem elektrischen Steckverbinder (12) stehendes, flexibles Teil (18) definiert, wobei das flexible Teil (18) dazu ausgebildet ist, den elektrischen Steckverbinder (12) im Hohlraum (16) abnehmbar zu halten, wobei der Hohlraum (16) den elektrischen Steckverbinder (12) in einer vorbestimmten Position (32) in der Sammelvorrichtung (14) festlegt, so dass der elektrische Steckverbinder (12) in der vorbestimmten Position (32) einer Montageanlage vorgelegt wird, **dadurch gekennzeichnet, dass** das flexible Teil (18) als ein Viertelkreis-Rippenabstandhalter (22) ausgebildet ist, der eine Vielzahl von Viertelkreisrippen aufweist, die sich senkrecht oder schräg von einem zentralen Schaft erstrecken.

2. Das System gemäß Anspruch 1, wobei das flexible Teil (18) aus einem nachgiebigen Material gebildet ist, welches sich von einem Material unterscheidet, das die Sammelvorrichtung (14) bildet.

3. Das System gemäß einem der vorherigen Ansprüche, wobei das flexible Teil (18) in einem Winkel (24) des Hohlraums (16) angeordnet ist.

4. Das System gemäß einem der vorherigen Ansprüche, wobei das flexible Teil (18) an der Sammelvorrichtung (14) durch eine T-förmige Schiene (26) befestigt ist, welche durch das flexible Teil (18) definiert ist und in einem korrespondierendem T-förmigen Hohlraum (28) angeordnet ist, der durch die Sammelvorrichtung (14) definiert ist.

5. Das System gemäß einem der vorherigen Ansprüche, wobei mindestens dreißig Prozent eines Oberflächenbereichs des elektrischen Steckverbinders (12) in dem Hohlraum (16) angeordnet ist.

6. Das System gemäß einem der vorherigen Ansprüche, wobei der elektrische Steckverbinder (12) an einer wahren Position von weniger als 2,0 Millimetern relativ zur vorbestimmten Position (32) angeordnet ist.

7. Das System gemäß einem der vorherigen Ansprüche, wobei der elektrische Steckverbinder (12) an einer wahren Position von weniger als 0,5 Millimetern relativ zur vorbestimmten Position (32) angeordnet ist.

8. Das System gemäß einem der vorherigen Ansprüche, wobei jeder Hohlraum (16) mindestens vier Bezugsfläche (34) umfasst, wobei die vier Bezugsflächen (34) dazu ausgebildet sind, den im Hohlraum (16) befindlichen elektrischen Steckverbinder (12) an mindestens vier entsprechenden Bezugspunkten (36) zu berühren.

9. Das System gemäß einem der vorherigen Ansprüche, wobei das flexible Teil (18) eine Haltekraft auf den elektrischen Steckverbinder (12) im Hohlraum (16) ausübt, welche zwischen etwa 40 Newton und etwa 60 Newton beträgt.

## Revendications

1. Un système, comprenant:
un faisceau de câblage (10) comprenant un câble métallique (11) et un connecteur électrique (12) ; et
un dispositif de rassemblement (14) comprenant une cavité (16) définissant un élément flexible (18) en contact sous compression avec le connecteur électrique (12), l'élément flexible (18) étant configuré de manière à retenir de manière amovible le connecteur électrique (12) dans la cavité (16), selon lequel la cavité (16) fixe le connecteur électrique (12) dans une position prédéterminée (32) dans le dispositif de rassemblement (14) de manière à ce que le connecteur électrique (12) soit présenté à un assembleur dans la position prédéterminée (32), **caractérisé en ce que** l'élément flexible (18) est une entretoise nervurée en quart de rond (22) ayant une pluralité de nervures en quart de rond s'étendant de manière perpendiculaire ou angulaire à partir d'une tige centrale.

2. Le système selon la revendication 1, selon lequel l'élément flexible (18) est formé d'un matériau élastique différent du matériau qui forme le dispositif de rassemblement (14).

3. Le système selon l'une des revendications précédentes, selon lequel l'élément flexible (18) est disposé dans un angle (24) de la cavité (16).

4. Le système selon l'une des revendications précédentes, selon lequel l'élément flexible (18) est attaché au dispositif de rassemblement (14) par un rail en forme de T (26) défini par l'élément flexible (18) qui est disposé dans une cavité correspondante en forme de T (28) définie par le dispositif de rassemblement (14).

5. Le système selon l'une des revendications précédentes, selon lequel au moins trente pour cent d'une zone de surface du connecteur électrique (12) sont disposés dans la cavité (16).

6. Le système selon l'une des revendications précédentes, selon lequel le connecteur électrique (12) est situé à une position réelle de moins de 2,0 millimètres par rapport à la position prédéterminée (32).

7. Le système selon l'une des revendications précédentes, selon lequel le connecteur électrique (12) est situé à une position réelle de moins de 0,5 millimètres par rapport à la position prédéterminée (32).

8. Le système selon l'une des revendications précédentes, selon lequel chaque cavité (16) comprend au moins quatre surfaces de référence (34), les quatre surfaces de référence (34) étant configurées de manière à toucher le connecteur électrique (12) disposé dans la cavité (16) au niveau d'au moins quatre points de référence correspondants (36).

9. Le système selon l'une des revendications précédentes, selon lequel l'élément flexible (18) exerce une force de retenue sur le connecteur électrique (12) dans la cavité (16) allant d'environ 40 newton à environ 60 newton.
